# EUROPÄISCHE PATENTANMELDUNG

(11) **EP 3 438 475 A1**
(43) Veröffentlichungstag der Anmeldung: **06.02.2019**
(21) Anmeldenummer: 18181067.2
(22) Anmeldetag: 02.07.2018
(51) Int. Cl.: F16B 25/00

(54) **BETONSCHRAUBE**

(30) Priorität: 31.07.2017 DE 102017117257
(71) Anmelder: fischerwerke GmbH & Co. KG, 72178 Waldachtal (DE)
(72) Erfinder: Schilling, Sebastian, 72250 Freudenstadt (DE)
(74) Vertreter: Suchy, Ulrich Johannes

(57) **Zusammenfassung**

Die Erfindung betrifft ein Befestigungselement (1) mit einem Gewinde (5), insbesondere eine selbstschneidende Betonschraube (2) zur Verwendung in einem betonartigen Untergrund. Das Gewinde (5) des Befestigungselements (1) ist durch Ein- oder Aufbringung von linienartigen Strukturen (9) in oder auf ein Vorgewinde (11) modifiziert.

## Beschreibung

Die Erfindung betrifft ein Befestigungselement mit einem Gewinde, insbesondere eine selbstschneidende Betonschraube mit den Merkmalen des Anspruchs 1.

Aus der Druckschrift JP 57177922 A ist ein Verfahren zum Härten eines Schraubengewindes mittels eines Lasers bekannt. In diesem Verfahren wird ein Laserstrahl senkrecht auf ein zu härtendes Gewinde einer Schraube gelenkt. Die Schraube wird sodann in eine Vorrichtung eingebracht, welche die Schraube derart translatorisch und rotatorisch mit einer vordefinierten Geschwindigkeit bewegt, dass der Laserstrahl das zu härtende Gewinde gezielt abfährt. Hierdurch erwärmt sich insbesondere das Gewinde der Schraube. Der Grad der Erwärmung ist durch die Leistung des Lasers und durch die translatorische und rotatorische Bewegungsgeschwindigkeit der Schraube bestimmt. Durch ein anschließendes rasches Abkühlen der Schraube wird das Gewinde gehärtet.

Aus der Druckschrift JP 59208022 A ist ein weiteres Verfahren zum Härten eines Schraubengewindes mittels eines Lasers bekannt. Anders als im vorhergehenden Verfahren wird hier der Laserstrahl nicht senkrecht auf den zu härtenden Gewindegang fokussiert sondern zuvor mittels eines Spiegels in zwei gleich energetische Teilstrahlen geteilt. Die Teilstrahlen werden sodann mit Hilfe eines optischen Systems gelenkt und auf die Gewindeflanken des zu härtenden Gewindes fokussiert. Wie im Verfahren der Druckschrift JP 57177922 A, wird auch in diesem Verfahren das zu härtende Gewinde gezielt unter den Laserstrahlen bewegt und anschließend durch rasches Abkühlen gehärtet.

Nachteilig an den Verfahren aus den Druckschriften JP 57177922 A und JP 59208022 A ist der relativ geringe Durchsatz und die signifikante Abhängigkeit des Härteergebnisses von der Steuerung und der Energiedichte des Lasers. Zudem können nicht alle Schrauben, insbesondere Betonschrauben, ohne zusätzliche Behandlung des Stahls mittels der vorgestellten Verfahren auf eine ausreichende Oberflächenhärte gebracht werden.

Aufgabe der Erfindung ist es daher, ein Befestigungselement mit einem Gewinde, insbesondere eine selbstschneidende Betonschraube, vorzuschlagen, bei welchem eine ausreichende Härte des Gewindes fertigungstechnisch einfacher erzielt wird. Eine selbstschneidende Betonschraube zeichnet sich insbesondere dadurch aus, dass diese beim Eindrehen in eine vorgefertigte, bohrlochähnliche Vertiefung im hochfesten Beton ein Gewinde entlang der Innenseite der bohrlochähnlichen Vertiefung schneidet. Hierfür muss der Durchmesser eines Schaftes der selbstschneidenden Betonschraube kleiner als der Durchmesser der bohrlochähnlichen Vertiefung sein. Zudem muss der Außendurchmesser des Gewindes zumindest geringfügig größer sein als der Durchmesser der bohrlochähnlichen Vertiefung.

Diese Aufgabe wird erfindungsgemäß durch die Merkmale des Befestigungselements gemäß Anspruch 1 gelöst. Die Erfindung schlägt ein Befestigungselement mit einem Gewinde, mit einem insbesondere umformend durch Walzen hergestellten Vorgewinde, insbesondere eine selbstschneidende Betonschraube, zur Verwendung in einem hochfesten, betonartigen Untergrund vor, dessen Vorgewinde zur Herstellung des Gewindes zumindest teilweise durch lagenweises Auf- oder Einbringen von linienartigen Strukturen mit Hilfe eines additiven Fertigungsverfahren modifiziert ist. Als "additives Fertigungsverfahren" wird insbesondere ein Fertigungsverfahren verstanden, bei dem ein Materialauftrag vollständig aus einer zumindest temporär erzeugten Schmelze erfolgt. Weiter schlägt die Erfindung ein Befestigungselement, insbesondere eine selbstschneidende Betonschraube, vor, dessen Gewinde durch Aufbringen von linienartigen Strukturen auf insbesondere einen metallischen Grundkörper eines gewindelosen Bolzens mittels eines additiven Fertigungsverfahrens gefertigt ist. Unter "Vorgewinde" ist eine Geometrie während der Herstellung zu verstehen, welche zur Modifikation mit dem additiven Fertigungsverfahren vorgesehen ist, wohingegen unter "Gewinde" entweder das Vorgewinde nach der Modifikation oder das durch das additive Fertigungsverfahren gefertigte Gewinde verstanden werden soll. Anders ausgedrückt, dient das Vorgewinde als Ausgangsbasis für die Modifikation, wohingegen das Gewinde stets den Zustand nach der Durchführung des additiven Fertigungsverfahrens meint. Unabhängig davon, ob das additive Fertigungsverfahren auf Basis eines Vorgewindes oder eines gewindelosen Bolzens erfolgt, schließt die Erfindung weitere Fertigungsschritte zur Herstellung des gebrauchsfertigen Befestigungselements nicht aus. Diese weiteren Fertigungsschritte können auch das Gewinde betreffen.

Vorteilhafterweise weist ein derartiges Befestigungselement Schneidvorrichtungen an insbesondere einem vorderen Ende des Befestigungselements, also dem Ende, welches zuerst mit der bohrlochähnlichen Vertiefung in Kontakt tritt, auf. Es ist unabdingbar, dass zumindest Teile des Gewindes, insbesondere die Schneidvorrichtungen, eine höhere Festigkeit aufweisen, als die härtesten Komponenten in dem zumeist amorphen, hochfesten Beton. Andernfalls wäre die selbstschneidende Wirkung stark gehemmt oder gar gänzlich unterdrückt. Die Verwendung eines derartigen Befestigungselements ist dabei nicht auf hochfesten Beton beschränkt. Auch sind Untergründe wie Normalbeton, Gasbeton, Naturstein oder Kunststoffe vorstellbar.

Ein derartiges Befestigungselement zur Verwendung als selbstschneidende Betonschraube ist vorzugsweise aus einem korrosionsbeständigen Stahl, wie beispielsweise einem Stahl mit der Werkstoffnummer 1.4401, 1.4571, 1.5525 oder 1.4362, hergestellt. Korrosionsbeständigkeit ist bei Betonschrauben immer dann zu beachten, wenn ein Einsatz im Außenbereich oder ein Einsatz in einer generell feuchten Umgebung vorgesehen ist. Bei einem Einsatz unter trockener Atmosphäre, welche beispielsweise in geheizten Innenräumen vorherrscht, kann ein Stahl mit einer geringen Korrosionsbeständigkeit gewählt werden. "Korrosionsbeständig" meint hier eine Beständigkeit gegenüber Korrosion, wie sie in der DIN EN ISO 12944 definiert ist. Diese aufgelisteten Stähle sollen nur als beispielhaft und nicht abschließend angesehen werden.

Ein aus diesen Stählen hergestelltes Befestigungselement, insbesondere dessen Gewinde, kann nicht ohne ein zusätzliches Verfahren auf eine ausreichende Oberflächenhärte gebracht werden, um eine selbstschneidende Wirkung in einem hochfesten Untergrund zu gewährleisten. Hierfür wird insbesondere das herstellungstechnisch aufwändige Verfahren des Einsatzhärtens angewendet, um in die Oberfläche des Befestigungselements zusätzlich Kohlenstoff einzubringen. Der Härtegrad des Stahls ist signifikant von dessen Kohlenstoffanteil abhängig und durch den Mehranteil an Kohlenstoff ist eine höhere Härte zu erzielen. Erfindungsgemäß wird das Einsatzhärten oder andere zusätzliche Härteverfahren dadurch ersetzt, dass in oder auf das Vorgewinde des Befestigungselements mit Hilfe eines additiven Fertigungsverfahrens zumindest partiell, lagenweise linienartige Strukturen ein- oder aufgebracht sind. Je nach Anforderung kann eine derartige linienartige Struktur durch eine oder mehrere Lagen hergestellt sein. Für das additive Fertigungsverfahren verwendbare Stähle sind beispielsweise Stähle mit den Werkstoffnummern 1.4718 oder 1.3348. Auch andere Stähle, die einen gewissen Prozentsatz Kohlenstoff aufweisen, sind verwendbar. Unter einer "linienartigen Struktur" ist eine Struktur zu verstehen, die in Verlauf und Gestalt generell dem Verlauf und der Gestalt des Vorgewindes folgt. Insbesondere ist diese Struktur ausgedehnt und nicht kreisförmig wie bei Schweißpunkten. Eine "eingebrachte" Struktur ist derart in das Vorgewinde integriert, dass sich der Gewindeaußendurchmesser des Vorgewindes nicht oder nur unwesentlich verändert. Hierfür sind vorzugsweise in dem Vorgewinde durch Walzen einzelne oder mehrere Gewindetaschen mit einheitlicher oder unterschiedlicher Ausdehnung vorgefertigt, welche mittels dem additiven Fertigungsverfahren lagenweise "aufgefüllt" werden. Eine "aufgebrachte" linienartige Struktur hingegen ist zumindest auf Teilen des Vorgewindes aufgebracht und zwar derart, dass sich an diesen Stellen der Gewindeaußendurchmesser gegenüber dem Außendurchmesser des Vorgewindes vergrößert. Insbesondere die aufgebrachten linienartigen Strukturen wirken als Schneidelemente. Ohne den erfindungsgemäßen Gedanken zu verlassen ist es auch möglich, ein derartiges Befestigungselement durch Aufbringung des vollständigen Gewindes mittels eines additiven Fertigungsverfahrens auf den metallischen Grundkörper, insbesondere auf den gewindelosen Bolzen oder ein ähnlich zylinderartiges Objekt, herzustellen. Durch diese Herangehensweise ist es möglich, die Gewindestruktur beliebig zu gestalten und diverse Gewindearten, wie beispielsweise Rundgewinde oder Trapezgewinde, herzustellen und sogar innerhalb des Befestigungselements zu kombinieren. Das derart hergestellte Gewinde kann, muss sich aber nicht gänzlich über den metallischen Grundkörper des gewindelosen Bolzens erstrecken. Auch können auf diese Weise nur wenige Gewindegänge hergestellt sein.

Eine bevorzugte Ausgestaltung des erfindungsgemäßen Befestigungselements mit einem Gewinde sieht vor, dass es sich bei dem additiven Fertigungsverfahren um Laserauftragschweißen mit metallischem Draht oder metallischem Pulver handelt. Beim Laserauftragschweißen mit metallischem Pulver wird insbesondere das zu modifizierende Vorgewinde, insbesondere die einzelnen Gewindespitzen des Vorgewindes lokal durch den Laserstrahl geringfügig aufgeschmolzen. Gleichzeitig wird ein inertes Gas mit feinem Metallpulver zugefügt. An der lokal erhitzten Gewindestelle des Vorgewindes schmilzt das Metallpulver auf und verbindet sich mit dieser. Die linienartigen Strukturen entstehen sodann dadurch, dass der Laser die zu modifizierenden Gewindestellen des Vorgewindes unter Zugabe des Metallpulvers gezielt entlang fährt, wobei das Entlangfahren durch eine Relativbewegung erreicht wird. Die Relativbewegung zwischen Laser und dem zu modifizierenden Vorgewinde kann durch alleinige Bewegung entweder des Lasers oder der Schraube, oder durch eine kombinierte Bewegung von Laser und Schraube erfolgen, beispielsweise eine Rotation der Schraube und eine Translation des Lasers. Alternativ ist auf die gleiche Art und Weise das Gewinde auf dem metallischen Grundkörper des gewindelosen Bolzens frei formbar. Bei dem Laserauftragschweißen mit Draht wird anstelle des Metallpulvers ein Metalldraht benutzt, wobei sich davon abgesehen das Verfahren im Wesentlichen analog verhält.

Durch die Modifikation des Vorgewindes oder die Gewindefertigung auf dem metallischen Grundkörper des ursprünglich gewindelosen Bolzens ist die Außenkontur des Gewindes vorzugsweise ganz oder zumindest teilweise durch das additive Fertigungsverfahren bestimmt. Bei einer gezielten Modifikation weniger oder gar nur einer Stelle des Vorgewindes, überwiegt die Gestalt des Vorgewindes, wohingegen bei mehreren Modifikationsstellen oder der Gewindefertigung auf dem metallischen Grundkörper des gewindelosen Bolzens, die durch das additive Fertigungsverfahren hervorgerufene Gewindeaußenkontur überwiegt. Die Außenkontur des Gewindes ist auch durch die Anzahl der aufgebrachten oder eingebrachten Lagen bestimmt. Durch die Anzahl der aufgebrachten oder eingebrachten Lagen und die daraus entstehenden, linienartigen Strukturen auf dem Vorgewinde kann der Gewindeaußendurchmesser gezielt beeinflusst werden. Insbesondere können durch die Herstellung relativ kurzer, linienartiger Strukturen, insbesondere auf dem vorderen Teil des Vorgewindes, welcher zuerst mit dem Untergrund in Kontakt tritt, den Einschneidvorgang unterstützende Schneidelemente auf dem Vorgewinde geschaffen werden. Durch den Aspekt der lagenweisen Herstellung des Gewindes, oder der lagenweisen Modifikation des Vorgewindes, ist es zudem möglich, für unterschiedliche Lagen unterschiedliche Stähle zu verwenden. Die lagenweise Fertigung der linienartigen Strukturen gestaltet sich derart, dass nach einem prozessabhängigen Abkühlprozess einer gefertigten Lage eine weitere Lage auf die bestehende Lage aufgebracht werden kann. Somit können die linienartigen Strukturen generell monolagig oder mehrlagig hergestellt sein.

Eine bevorzugte erfinderische Ausgestaltung des Befestigungselements mit Gewinde sieht vor, dass bei dem additiven Fertigungsverfahren, insbesondere bei dem Laserauftragschweißen mit Pulver oder Laserauftragschweißen mit Draht, Metalle verwendet werden, die mindestens einen Kohlenstoffgehalt von 0,4% aufweisen. Durch diesen Kohlenstoffgehalt ist gewährleistet, dass insbesondere die in einen hochfesten Beton einzuschraubende Betonschraube eine ausreichende Gewindehärte aufweist, um ausreichende Schneideigenschaften zum Gewindeformen zu zeigen. Unter gewissen Umständen, bei einem Einsatz in einem weniger harten Untergrund, kann der Kohlenstoffgehalt auch kleiner als 0,4% sein, was zu einer geringeren Härte des Gewindes führt. Die Erfindung schlägt vor, dass der Kohlenstoffgehalt derart hoch gewählt ist, dass die daraus resultierenden Gewindeteile eine höhere Festigkeit als die härtesten Partikel im einzuschraubenden Untergrund aufweisen.

In einer bevorzugten erfindungsgemäßen Ausgestaltung des Befestigungselements mit Gewinde ist vorgesehen, dass die Härte des Gewindes gänzlich oder zumindest teilweise durch das additive Fertigungsverfahren bestimmt ist. Vorzugsweise bestimmt das für das additive Fertigungsverfahren benutzte Metall und die für das additive Fertigungsverfahren verwendeten Parameter die Gewindehärte, und es ist kein separater Härteprozess, wie beispielsweise Einsatzhärten oder ein rascher Abkühlprozess, notwendig. Eine durch das additive Fertigungsverfahren gänzlich bestimmte Festigkeit des Gewindes liegt dann vor, wenn das Gewinde gänzlich durch das additive Fertigungsverfahren hergestellt, oder wenn das Vorgewinde gänzlich mit mit dem additiven Fertigungsverfahren hergestellten linienartigen Strukturen modifiziert ist. Eine teilweise bestimmte Festigkeit durch das additive Fertigungsverfahren liegt dann vor, wenn nur Teile des insbesondere umformend durch Walzen hergestellten Vorgewindes durch linienartige Strukturen modifiziert sind.

Eine bevorzugte erfindungsgemäße Ausgestaltung des Befestigungselements mit Gewinde sieht vor, dass die Härte des modifizierten oder des hergestellten Gewindes mindestens eine Rockwell-Härte von 55 (55 HRC) aufweist. Diese Härte gewährleistet ausreichende Schneideigenschaften zum Gewindeformen, insbesondere beim Einschrauben einer Betonschraube in einen Untergrund aus hochfestem Beton. Ist eine Betonschraube in einen weicheren Untergrund, wie beispielsweise Gasbeton, einzubringen, kann die Härte des Gewindes auch einen geringeren Wert als 55 HRC aufweisen. Insbesondere ist darauf zu achten, dass die Härte des Gewindes zumindest teilweise härter ist als die härtesten Komponenten, welche im zu befestigenden Untergrund enthalten sind.

Die Erfindung wird nachfolgend anhand von drei in der Zeichnung dargestellten Ausführungsbeispielen näher erläutert.

Es zeigen:
- Figur 1: eine perspektivische Darstellung einer erfindungsgemäßen Betonschraube;
- Figur 2: ein Schnitt durch einen Gewindegang einer weiteren erfindungsgemäßen Betonschraube; und
- Figur 3: ein Schnitt durch einen Teil eines ursprünglich gewindelosen Bolzens, auf dessen Oberfläche linienartige Strukturen zur Ausbildung einer dritten erfindungsgemäßen Betonschraube geformt sind.

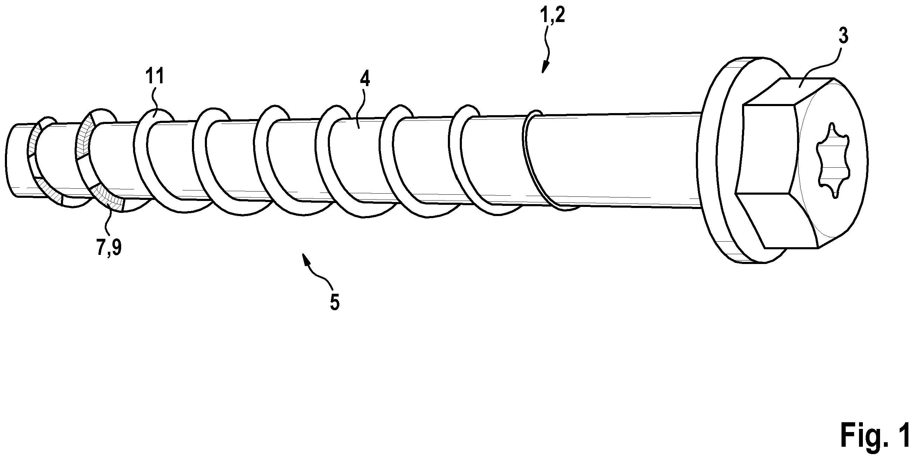

Bei dem in Figur 1 dargestellten, erfindungsgemäßen Befestigungselement 1 handelt es sich um eine erfindungsgemäße, selbstschneidende Betonschraube 2. Das in der Figur 1 dargestellte, erfindungsgemäße Befestigungselement 1 ist vorzugsweise aus einem korrosionsbeständigen Stahl hergestellt. Für den Einsatz des Befestigungselements 1 als Betonschraube 2 in einer feuchten Umgebung, welche sich durch einen gewissen Wasseranteil auszeichnet, ist eine Korrosionsbeständigkeit für die Langlebigkeit der Betonschraube 2 unabdingbar. Ist, bedingt durch den Einsatzzweck des Befestigungselements 1, die Korrosionsbeständigkeit vernachlässigbar, wie dies beispielsweise bei einem Einsatz in trockenen Gebäudeinnenbereichen der Fall ist, kann das Befestigungselement 1 auch aus einem nicht oder nur geringfügig korrosionsbeständigen Stahl hergestellt sein. Ein im Wesentlichen zylindrischer Schaft 4 des Befestigungselements 1 ist durch einen Walzdraht gebildet und ein Vorgewinde 11 des Befestigungselements 1 ist aus dem Walzdraht durch Gewindewalzen hergestellt. Unter dem "Vorgewinde" 11 des Befestigungselements 1 soll eine ursprünglich durch Umformen hergestellte, zu modifizierende Geometrie verstanden werden, die bereits einen Teil des späteren Gewindes 5 bildet. Das "Gewinde" 5 hingegen stellt das Ergebnis nach der Modifikation oder Herstellung mit einem additiven Fertigungsverfahren dar. Das Befestigungselement 1 umfasst einen Schraubenkopf 3 mit einem Außensechskant und einen Innensechsrund zur Werkzeugaufnahme, welcher umformend hergestellt ist. Weitere Ausgestaltungen des Schraubenkopfes 3 sind möglich und nicht erfindungswesentlich. Die Ausgestaltung des Vorgewindes 11 des in der Figur 1 dargestellten Befestigungselements 1 ist beispielhaft und erstreckt sich in diesem Fall über einen Großteil des Schaftes 4. Das hintere Ende des Schaftes 4 ist gewindefrei. Unter dem "hinteren Ende" des Schaftes 4 ist das Ende zu verstehen, welches in Richtung des Schraubenkopfes 3 lokalisiert ist, wohingegen ein "vorderes Ende" das Ende des Befestigungselements 1 beschreibt, welches zuerst in ein Bohrloch in einem zu befestigenden Untergrund (nicht dargestellt) eingebracht wird. Es ist nicht erfindungswesentlich, dass das Gewinde 5, wie es das Befestigungselement 1 zeigt, unterschiedliche Gewindeaußendurchmesser an unterschiedlichen Stellen des Gewindes 5 aufweist. Parameter, wie die Zahl der Gewindegänge, die Steigung, die Flankenhöhe und Flankenwinkel, können anders gewählt sein. Das Gewinde 5 kann derart ausgestaltet sein, dass es am vorderen Ende des Befestigungselements 1 einen geringeren Außendurchmesser als auf dem restlichen Schaft 4 in Richtung des Schraubenkopfes 3 aufweist. Um dem Befestigungselement 1 die Befähigung einer selbstschneidenden Betonschraube 2 zu verleihen, muss das Gewinde 5 zumindest partiell einen Härtegrad von ungefähr 55 HRC (Härteangabe in Rockwell) aufweisen, jedenfalls einen so hohen HRC-Grad, dass die Betonschraube 2 in der Lage ist, ein Gewinde in das Bohrloch im hochfesten Beton einzuschneiden, um sich somit in diesem zu verankern. Vorteilhafterweise weist das Gewinde 5 in der Nähe des vorderen Endes des Befestigungselements 1 eine ausreichende Härte auf. Hierfür sind durch Walzen hergestellte, trapezförmige Vorgewindetaschen 10 in das Vorgewinde 11 eingebracht. Die trapezförmige Ausgestaltung der Vorgewindetaschen 10 ist auf den Herstellungsprozess zurückzuführen und kann bei anderen Herstellungsverfahren auch von der trapezförmigen Form abweichen und hin zu einer näherungsweise rechtwinkligen oder radienbehafteten Form tendieren. Die Tiefe der Vorgewindetaschen 10 muss das Vorgewinde 11 nicht gänzlich derart durchbrechen, dass die Vorgewindetaschen 10 direkt bis auf den Schaft 4 reichen. Auch kann es zweckdienlich sein, die Vorgewindetaschen 10 derart zu fertigen, dass diese nicht komplett bis auf den Schaft 4 reichen. Die Vorgewindetaschen 10 sind mit lagenweise hergestellten, linienartigen Strukturen 9 aufgefüllt, welche mittels des additiven Fertigungsverfahrens, wie beispielsweise Laserauftragschweißen, mit metallischem Draht oder metallischem Pulver hergestellt sind. Die linienartigen Strukturen 9 erstrecken sich jeweils längs des Vorgewindes 11. Unter "aufgefüllt" ist zu verstehen, dass durch das additive Fertigungsverfahren solange linienartige Strukturen 9 lagenweise und stapelartig in die Vorgewindetaschen 10 eingebracht werden, bis die Vorgewindetaschen 10 vollständig aufgefüllt sind, und zwar derart, dass sich die Geometrie im Bereich der Vorgewindetaschen 10 übergangslos in die restliche Geometrie des Vorgewindes 11 einfügt. Es besteht außerdem die Möglichkeit, die Vorgewindetaschen 10 nur teilweise aufzufüllen, oder aber auch linienartige Strukturen 9, welche aus mehreren Lagen bestehen, in die Vorgewindetaschen 10 derart einzubringen, dass an den Stellen, an denen sich Vorgewindetaschen 10 befinden, der Außendurchmesser des ursprünglichen Vorgewindes 11 überschritten wird. Damit die linienartigen Strukturen 9 eine ausreichende Härte von mindestens 55 HRC zur Eignung des Befestigungselements 1 als selbstschneidende Betonschraube 2 aufweisen, sind diese vorzugsweise aus einem Werkstoff der Werkstoffklasse 1.4718 mit einem Kohlenstoffanteil von rund 0,5% oder einem Werkstoff der Werkstoffklasse 1.3348 mit einem Kohlenstoffgehalt von rund 0,9% hergestellt. Prinzipiell ist jedoch jeder korrosionsbeständige Stahl mit einem Kohlenstoffgehalt > 0,4 % verwendbar, da diese durch den additiven Fertigungsprozess eine ausreichende Härte gewährleisten. Der Vorteil dieses Verfahrens liegt unter anderem darin, dass die linienartigen Strukturen 9 nach ihrer Herstellung nicht rasch abgekühlt werden müssen, um den Härteprozess zu durchlaufen, wie dies bei anderen Härteverfahren teilweise notwendig ist. In Figur 1 sind beispielhaft vier Vorgewindetaschen 10 nahezu bündig mit dem restlichen Außendurchmesser des Vorgewindes 11 aufgefüllt. Hierbei sind zwei Vorgewindetaschen 10, welche sich am vorderen Ende des Befestigungselements 1 befinden, mit jeweils nur einer einlagigen linienartigen Struktur 9 aufgefüllt, wohingegen die beiden anderen Vorgewindetaschen 10, welche näher in Richtung des Schraubenkopfes 3 angeordnet sind, jeweils eine zweilagige linienartige Struktur 9 aufweisen. Die Anzahl der linienartigen Strukturen 9 sowie deren Positionen und Ausdehnungen sollen nur als beispielhaft verstanden werden. Die radiale Ausdehnung einer einzelnen linienartigen Struktur 9, also deren Höhe, ist vom additiven Prozess selbst stark abhängig. Die geringste Höhe einer linienartigen Struktur 9 ist durch die Ausdehnung einer einlagig gefertigten linienartigen Struktur 9 begrenzt. Die Gesamtausdehnung der linienartigen Struktur 9 in radialer Richtung vom Schaft 4 ausgehend kann durch eine Vielzahl von lagenweise aufeinander gefertigten und somit aus mehreren Lagen bestehenden, linienartigen Strukturen 9, nahezu beliebig eingestellt werden. Dabei kann sowohl die Anzahl als auch die Ausdehnung der Gewindetaschen 10 deutlich variieren. Im Extremfall kann sich eine einzelne Vorgewindetasche nahezu über das gesamte Gewinde 5 des Befestigungselements 1 erstrecken oder auch nur an einer einzigen Position desselben angeordnet sein.

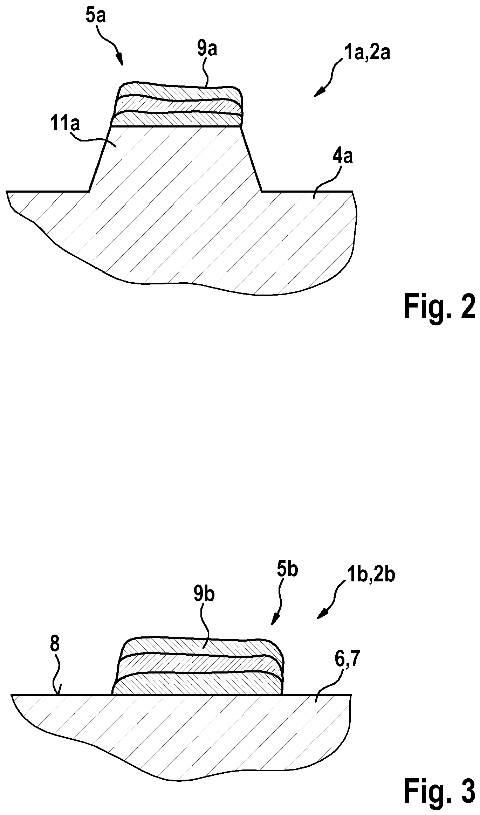

Figur 2 zeigt einen Schnitt durch den Gewindegang eines weiteren erfindungsgemäßen Befestigungselements 1a, das eine weitere erfindungsgemäße selbstschneidende Betonschraube 2a bildet. Auf ein bestehendes Vorgewinde 11a des Befestigungselements 1a sind durch ein additives Fertigungsverfahren, insbesondere durch Laserauftragschweißen mit Pulver oder Draht, linienartige Strukturen 9a aufgebracht. Die linienartigen Strukturen 9a sind derart auf das Vorgewinde 11a aufgebracht, dass die ursprüngliche Geometrie des Vorgewindes 11a nicht verändert, aber zu einem Gewinde 5a mit größerer Flankenhöhe ergänzt ist. Anders formuliert weist das dadurch entstehende Gewinde 5a eine größere Flankenhöhe als das Vorgewinde 11a auf. Hierbei kann eine einlagige linienartige Struktur 9a oder eine mehrlagige Struktur 9a das Vorgewinde 11a gänzlich bedecken. Dies hat zur Folge, dass die Härte des resultierenden Gewindes 5a gänzlich durch die linienartigen Strukturen 9a, genauer gesagt durch deren Fertigungsprozess, bestimmt sein kann. Es können jedoch auch einzelne, voneinander getrennte linienartige Strukturen 9a auf dem Vorgewinde 11a aufgebracht sein. Dies ist insbesondere bei der selbstschneidenden Betonschraube 2a zweckdienlich, um die Schneideigenschaften nachträglich zu optimieren. In Figur 2 ist eine aus drei Lagen bestehende, linienartige Struktur 9a dargestellt, die auf dem Vorgewinde 11a gefertigt ist. Die Anzahl der Schichten ist beispielhaft, denn je nach Einsatzzweck des Befestigungselements 1a kann bereits eine einlagige linienartige Struktur 9a auf dem Vorgewinde 11a des Befestigungselements 1a ausreichend sein, um somit ein Gewinde 5a zu erhalten, welches dem Einsatzzweck genügt, oder aber es ist notwendig, die linienartigen Strukturen 9a mehrlagig zu fertigen. Auch ist der Begriff "linienartig" nicht streng geometrisch auszulegen, da es fertigungsbedingt zu Schwankungen in der Gestalt einzelner linienartiger Strukturen 9a kommen kann. Durch die Aufbringung linienartiger Strukturen 9a auf das Vorgewinde 11a, kann auch dessen ursprüngliche Form durch den Fertigungsprozess geringfügig geändert sein. Der Verlauf des Vorgewindes 11 a bleibt jedoch stets weitestgehend unverändert.

Figur 3 zeigt einen Schnitt eines weiteren erfindungsgemäßen Ausführungsbeispiels eines Befestigungselements 1b, das eine weitere selbstschneidende Betonschraube 2b bildet. Der Schnitt zeigt einen Teil eines Gewindes 5b, welches durch Auftrag von einer dreilagigen, linienartigen Struktur 9b auf einer Oberfläche 8 eines metallischen Grundkörpers 6, insbesondere einem gewindelosen Bolzen 7, gefertigt ist. Der Vorteil dieses erfindungsgemäßen Ausführungsbeispiels ist darin zu sehen, dass die Gewindesteigung und die Gewindehöhe des Gewindes 5b und damit das Gewinde 5b selbst, bezüglich der Geometrie frei wählbar ist, da keinerlei Einschränkungen durch ein etwaig bestehendes Vorgewinde, wie dies in den Figuren 1 und 2 der Fall ist, vorliegen. Auch in diesem Ausführungsbeispiel ist die Anzahl der aufgetragenen, linienartigen Strukturen 9b und deren Lagenanzahl stark vom Fertigungsverfahren selbst und vom Einsatzzweck des Befestigungselements 1b abhängig.

### Bezugszeichenliste

- 1, 1a, 1b: Befestigungselement
- 2, 2a, 2b: selbstschneidende Betonschraube
- 3: Schraubenkopf
- 4, 4a: Schaft
- 5, 5a, 5b: Gewinde
- 6: metallischer Grundkörper
- 7: gewindeloser Bolzen
- 8: Oberfläche
- 9, 9a, 9b: linienartige Strukturen
- 10: Vorgewindetasche
- 11, 11a: Vorgewinde

## Patentansprüche

1. Befestigungselement (1, 1a, 1b) mit einem Gewinde (5, 5a, 5b), insbesondere eine selbstschneidende Betonschraube (2, 2a, 2b) zur Verwendung in einem hochfesten, betonartigen Untergrund, **dadurch gekennzeichnet, dass** das Gewinde (5, 5a, 5b) des Befestigungselements (1, 1a, 1b) entweder durch Aufbringung auf einen metallischen Grundkörper (6) des Befestigungselements (1b), insbesondere einem gewindelosen Bolzen (7), durch ein additives Fertigungsverfahren hergestellt, oder dass ein, insbesondere umformend durch Walzen hergestelltes, bestehendes Vorgewinde (11, 11a) am Befestigungselement (1, 1a) zur Herstellung des Gewindes (5, 5a) nachträglich durch schichtweises Auf- oder Einbringen von linienartigen Strukturen (9, 9a) mittels einem additiven Fertigungsverfahren modifiziert ist.

2. Befestigungselement (1, 1a, 1b) mit einem Gewinde (5, 5a, 5b) nach Anspruch 1, **dadurch gekennzeichnet, dass** es sich bei dem additiven Fertigungsverfahren um Laserauftragschweißen mit metallischem Draht oder metallischem Pulver handelt.

3. Befestigungselement (1, 1a, 1b) mit einem Gewinde (5, 5a, 5b) nach Anspruch 1 oder 2, **dadurch gekennzeichnet, dass** die Außenkontur des Gewindes (5, 5a, 5b) ganz oder zumindest teilweise durch das additive Fertigungsverfahren bestimmt ist.

4. Befestigungselement (1, 1a, 1b) mit einem Gewinde (5, 5a, 5b) nach einem der vorangegangenen Ansprüche, **dadurch gekennzeichnet, dass** bei dem additiven Fertigungsverfahren Metalle mit einem Kohlenstoffgehalt von mindestens 0,4 % verwendet werden.

5. Befestigungselement (1, 1a, 1b) mit einem Gewinde (5, 5a, 5b) nach einem der vorangegangenen Ansprüche, **dadurch gekennzeichnet, dass** die Härte des Gewindes (5, 5a, 5b) gänzlich oder zumindest teilweise durch das additive Fertigungsverfahren bestimmt ist.

6. Befestigungselement (1, 1a, 1b) mit einem Gewinde (5, 5a, 5b) nach einem der vorangegangenen Ansprüche, **dadurch gekennzeichnet, dass** die Härte des modifizierten oder hergestellten Gewindes (5, 5a, 5b) mindestens 55 HRC beträgt.

7. Befestigungselement (1, 1a, 1b) mit einem Gewinde (5, 5a, 5b) nach einem der vorangegangenen Ansprüche, **dadurch gekennzeichnet, dass** das Befestigungselement (1, 1a, 1b) aus einem korrosionsbeständigen Stahl hergestellt ist.
